# EUROPEAN PATENT SPECIFICATION

(11) **EP 2 450 269 B1**
(45) Date of publication and mention of the grant of the patent: **06.01.2016**
(21) Application number: 10793638.7
(22) Date of filing: 21.06.2010
(51) Int. Cl.: B62H 5/04, B62H 5/00, E05B 71/00

(54) **THEFT-PREVENTION DEVICE FOR MOTORCYCLES, QUADS, SCOOTERS AND THE LIKE**
DIEBSTAHLSCHUTZVORRICHTUNG FÜR MOTORRÄDER, QUADS, ROLLER UND DERGLEICHEN
DISPOSITIF ANTIVOL POUR MOTOCYCLETTES, QUADS, SCOOTERS ET ANALOGUES

(30) Priority: 01.07.2009 ES 200930403
(43) Date of publication of application: 09.05.2012
(73) Proprietor: Componentes Europeos Moto-Auto, S.l., 08110 Montcada I Reixac (Barcelona) (ES)
(72) Inventor: COLOME CALAFI, Fernando Salvador, E-08110 Montcada I Reixac (Barcelona) (ES)
(74) Representative: Morgades y Manonelles, Juan Antonio
(86) International application number: PCT/ES2010/070414
(87) International publication number: WO 2011/000985

(56) References cited:
- EP-A2- 1 548 216
- WO-A1-93/15295
- CA-A1- 2 164 654
- DE-C- 404 570
- ES-T3- 2 135 151
- ES-U- 271 180
- ES-U- 295 543
- ES-U- 1 008 787
- ES-U- 1 020 125
- ES-U- 1 020 125
- GB-A- 358 139
- JP-A- 8 301 159
- US-A- 4 779 435

## Description

### Purpose of the invention:

The invention refers to an anti-theft device for motorcycles, quads, scooters and the like, formed by an anti-theft chain on one end of which is a locking terminal designed to be anchored at least on the fixing pivot on one end of the handlebar, while the other end of the anti-theft chain has a fixing terminal designed to secure to a support plate firmly attached to the vehicle chassis, but with the capacity of rotation with regard to the plate, this fixing terminal-plate assembly presenting numerous advantages, as will be described below.

### State of the Art:

On the market, there are many state of the art anti-theft devices that secure a fixed point of the vehicle chassis, such as motorcycles, quads, scooters and the like, with another moving point of the vehicle, especially the end of the handlebar.

These anti-theft devices and more specifically the supporting elements to secure the anti-theft chain to a fixed point of the chassis are not very safe against possible robbery attempts, nor do they enable the anti-theft chain to be removed from the anchoring elements. As the anti-theft device does not allow the removal/fitting of the anti-theft chain from the fixed point support anchoring, it needs a fitting point for when the anti-theft device is not needed, namely when it is not necessary to secure the vehicle (blocking the handlebar movement, and stopping it from being moved.

JPH08301159 (A) discloses the preamble of claim 1 and shows a motorcycle theft prevention device that can be easily locked and removed by use of a hooking part such as a helmet hook to which a helmet can be hooked. It comprises a theft prevention device 33 so designed that one end of a connecting rod 37 can be freely removably locked to the hooking part 32 and that the other end of the connecting rod 37 can be freely removably linked to the handle bar 17 of the steering mechanism 18 is provided, and the rotation of the steering mechanism 18 is regulated by a theft prevention device 33. However, this motorcycle theft prevention is a very complex device.

### Scope of the invention:

The purpose of this invention is an anti-theft device in which the chain with its accessories may be separated and reconnected to the anchoring support of the anti-theft device, with the aim of placing the anti-theft chain in a compartment most vehicles have for storing objects. Thereby one avoids having to have an additional locking terminal secured to a fixed point of the vehicle, for instance at the rear of the seat designed to secure the chain when the anti-theft device not being used.

It is well known that in many cases, providing two support brackets on different points of the vehicle chassis may be unsightly.

Therefore, the advantage of not having to attach a rear supporting elements onto the vehicle, as well as saving the cost of manufacturing an additional part, also has an aesthetical advantage that could be positive when selling a vehicle that incorporates this anti-theft device.

### Description of the invention:

In this description the term mounting plate is used as synonym for the support plate of the invention.

The present invention is defined the features of claim 1. It comprises, principally, an anti-theft chain formed by a series of links or similar elements covered on the outside with a protective cover, to one of the ends of which and by adequate means has secured to it a locking terminal, preferably to the fixing pivot of the end of the handlebar with its corresponding lock. The opposite end of the anti-theft anchored to a plate secured to the chassis of the vehicle by means of a bush firmly attached to the plate, being the anchoring of the fixing terminal to the plate its main characteristic, as the fixing terminal comprises a coupling unit that is inserted and secured inside a bush attached to the plate, the coupling unit is able to rotate freely around the longitudinal axis of the bush, between two limit positions (the rotating movement being more than 180° and less than 360°), and, furthermore, in a specific rotation position this coupling unit is designed so that it can be removed from the bush.

This removal position will be preferably in one of the two limit positions.

Is, therefore, precisely this capacity for rotation of the coupling unit to the fixing terminal with regard to the longitudinal shaft of the bush without it being possible to remove the coupling unit of the fixing terminal of the bush axially, guaranteeing that the user can pivot the anti-theft chain from the operating position on the end of the handlebar to standby position at the rear of the seat (less than 270° turn). This rotating movement is achieved by making an circumferential interior groove as a guide on the inside of the bush, which works in combination with a projecting element like a trigger in the coupling unit of the anchoring terminal, which is inserted inside the bush and is retained in this circumferential interior groove.

The two limit positions for turning the coupling unit of the anchoring terminal with regard to the fixed bush are defined by the provision on the inside of the bush of a stop element that projects slightly with regard to the inner surface of the circumferential interior groove, so that the aforementioned trigger acts as a stop on both sides (left and right) of the stop element, thereby determining the two limit positions.

To be able to axially remove the coupling unit from the anchoring terminal of the inside of the bush, this bush has a rim with the same perimeter as the perimeter of the trigger, so that when the trigger element faces the rim of the bush, the anchoring terminal can be removed from inside the bush. Likewise, to reinsert the anchoring terminal inside the bush, proceed in the same manner, namely placing one element against the other.

Therefore, the essential advantage of the present invention is to improve reliability against possible undesired manipulation of the chain at the point where the fixing terminal joins the plate, and also the possibility of separating easily and conveniently the fixing terminal from the plate, and therefore the user can store the chain in the vehicle compartment if desired, and then secure the terminal securing the chain to the plate if the user wishes to immobilise the vehicle.

According to one of the preferred configurations of the present invention, the aforementioned mounting plate of the anti-theft device secured to a fixed point on the vehicle chassis comprises a thin body formed by two flat surfaces joined together in a slightly angular manner (to adapt to the design of the vehicle), which on one of its ends of has an elliptical groove and holes for it to be secured to the vehicle chassis by means of anti-theft screws, while the opposite end has an orifice for the articulated fitting (with the capacity for rotation) and with which can be released from the securing terminal of the anti-theft chain when desired.

The plate is designed to be fitted preferably to a point close to the edge of the vehicle seat, so that part of the plate is inside the seat and a part of the plate projects from the seat in order to secure the terminal of the anti-theft chain. This design reduces the risk of dismantling the plate, and in addition, when the user closes the seat, only part of the plate is visible from the outside.

The means for securing the plate to the coupling unit of the fixing terminal of the chain is formed by at least one bush firmly secured to the aforementioned plate (for instance by welding or with fasteners), which is adapted to house and secure and with the possibility of being removed when in a certain position on the end of the anchoring terminal.

The coupling unit securing the chain fixing terminal comprises at least: (a) A longitudinal shaft firmly secured at its upper part to a an elongated support that projects laterally, this elongated support is designed to be secured direct or indirectly to the terminal of the end of the anti-theft chain; (b) A built in trigger element on the lower end of the shaft with a projecting part with regard to the diameter of the aforementioned shaft; and (c) A nut secured inside the trigger element adapted to lock and guide the shaft + elongated support + trigger assembly.

Optionally a safety cap may be incorporated which is fixed covering the top of the longitudinal shaft that projects to the exterior surface of the elongated support.

Preferably, the trigger element has a flat thin body with a circular exterior perimeter having a semi-circular projection, the shape of the perimeter matches the perimeter of the upper rim of the bush, so that the trigger can be easily inserted into this rim.

The nut is preferably elongated with a symmetrical cross-section with two portions opposite each other symmetrical and with a semi-circular shape, and two straight portions opposite each other and symmetrical.

This elongated support secured to the fixing terminal of the end of the anti-theft chain will preferably be formed by a flat thin plate secured firmly by one of its ends to the head or stub of the end of the of the anti-theft chain, and by the other end it will be firmly secured to the shaft + elongated support + nut + trigger assembly, so that the elongated support can rotate around the bush.

The mounting of this elongated support to the stub of the end of the anti-theft chain allows certain rotating movement of the elongated support with regard to the fixing terminal of the chain around a second axis, so that the capacity of tipping the anti-theft chain with regard to the plate secured to the chassis of the vehicle is really high, as the turning movement of the shaft + elongated support + nut + trigger securing assembly is added to the turning movement of the elongated support with regard to the end of the anti-theft chain.

The shaft + elongated support + nut + trigger securing assembly may be manufactured in a single piece,

The shaft + elongated support + nut + trigger securing assembly may be manufactured in a single piece, or by the assembly of its different parts as described above.

Preferably, the anti-theft bush has an externally cylindrical main body with a lower cylindrical extension of smaller diameter than the main body, the body having an interior cavity through the entire body or not, designed to receive and house securely the shaft + nut + trigger securing assembly.

At the upper base or rim of the anti-theft bush there is a semi-circular recess enabling the inclusion and exclusion of the shaft + nut + trigger securing assembly, and consequently to remove and insert the anti-theft chain according to the needs of the user, for instance if it is not desired to store it secured to the rear support of the vehicle chassis.

The inner surface of the aforementioned interior cavity has three different areas: a cylindrical upper area, an intermediate area, also cylindrical but with a larger diameter that guides the trigger element, and a lower area that is also cylindrical of smaller diameter than the upper area, to house the lower area of the shaft. This second intermediate area has a projecting stop element, designed to acts as a stop for the projecting element of the trigger and thus delimit the two limit positions of the shaft + elongated support + nut + trigger assembly.

The lower extension of the anti-theft bush preferably has a upper portion that extends seamlessly forming a lower tapered portion.

Advantageously, the specific design of the shaft + elongated support + nut + trigger securing assembly and of the bush + mounting plate securing assembly, allow optimum rotating movement of the shaft + elongated support + nut + trigger securing assembly with regard to the bush + mounting plate securing assembly, this rotating movement being more than 180° and less than 360°, thanks to the existence of a trigger element that works as a stop with a stop element on the bush.

Preferably the fixing support that is part of the coupling unit for securing terminal of the chain will be secured to the same fixing terminal of the chain via a orifice-pin system, the orifice being on the outermost end of the fixing support.

Below is a detailed embodiment of the different parts of the anti-theft device identified in the drawings with the corresponding numbers; (10) antitheft device, (11) anti-theft chain, (12) locking terminal of the chain (11), (13) lock, (14) pivot mounting on handlebar, (15) fixing terminal of the chain (11), (16) support or mounting plate, (17) elliptical groove, (18) bolt, (19) Rear support mounting to the chassis, (27-28-29-30) portions of the mounting plate (16), (31) fixing support to the fixing terminal (15), (31') fixing support to the fixing terminal (15), (32) shaft, (33) Anti-theft screws, (34) chassis, (35) mounting bush of plate (16), (35') mounting bush of plate (35), (36) interior cavity, (36') interior cavity, (37) upper base of (35), (38) semi-circular recess, (39) cap, (39') cap, (40) intermediate portion of the central orifice (36), (41) shaft, (41') shaft, (42) tube, (43) trigger, (43') trigger, (44) drill, (45) elastic ring, (47) bush, (48) plate (50), (53) stub, (54) shaft, (55) screw, (56) holes of the support or mounting plate (16), (57) main cylindrical element of the fixing terminal (15), (58) seat, (59) bush stop (35), (60) nut, (61) projecting portion of the trigger (43), (62) elongated support + shaft + nut + trigger assembly, (63) lower base of the bush (35').

Other details and characteristics shall be shown throughout the description below referring to the attached drawings, which are shown for illustrative but not limiting purposes only in a drawing description of the invention.

### Description of the drawings:

Figure 1 is a perspective view of the anti-theft device of the invention (10) fitted onto a scooter type vehicle, and with the anti-theft chain secured to the handlebar, in which one can see a detail view of the layout of the mounting plate (16).
Figure 2 is a perspective view of the anti-theft device (10), wherein the mounting plate is shown (16) firmly secured to the vehicle chassis, preferably on the inside of the seat and the terminal (15) of the chain (11) and the part the terminal is secured to slightly projecting, and also showing the chain (11) and the locking terminal of the chain (12).
Figure 3 is a detailed perspective view of the mounting plate (16) along with the bush (35) already fitted onto the vehicle chassis by means of anti-theft screws (33), but without the anti-theft chain (11) positioned and anchored to this bush (35).
Figure 3a is a detailed perspective view of the mounting plate (16) already fitted onto the vehicle chassis by means of anti-theft screws (33) and on the

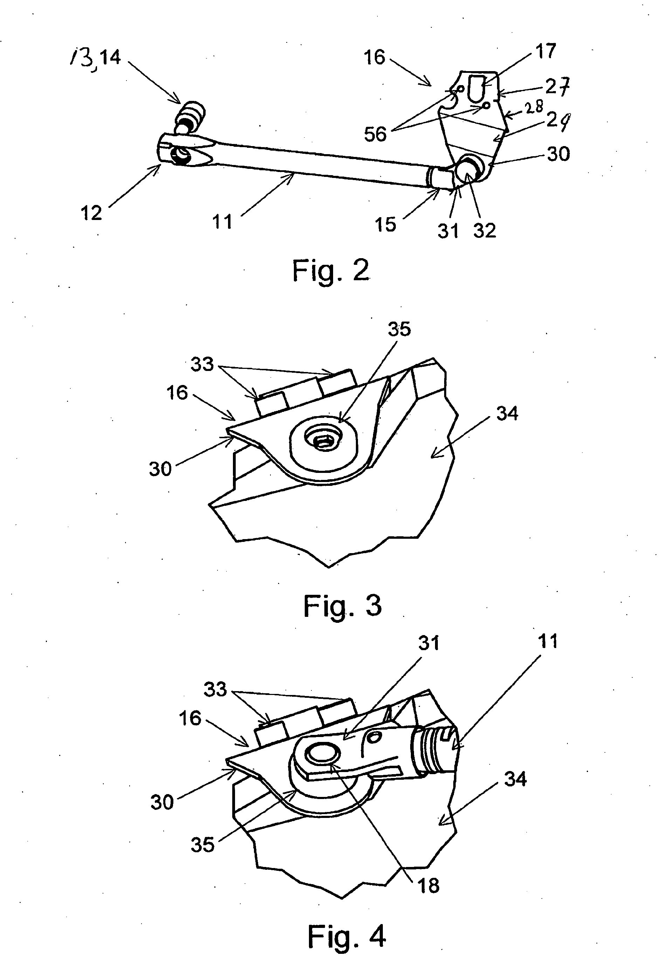

Figure 3a is a detailed perspective view of the mounting plate (16) already fitted onto the vehicle chassis by means of anti-theft screws (33) and on the opposite end there is a bush (35) for securing the plate (16), but without the anti-theft chain (11) anchored to this bush (35).
Figure 4 is the same view as in figure 3, but in this case the anti-theft chain (11) is duly secured in the bush (35) by anchoring the elongated support + shaft + nut + trigger assembly.

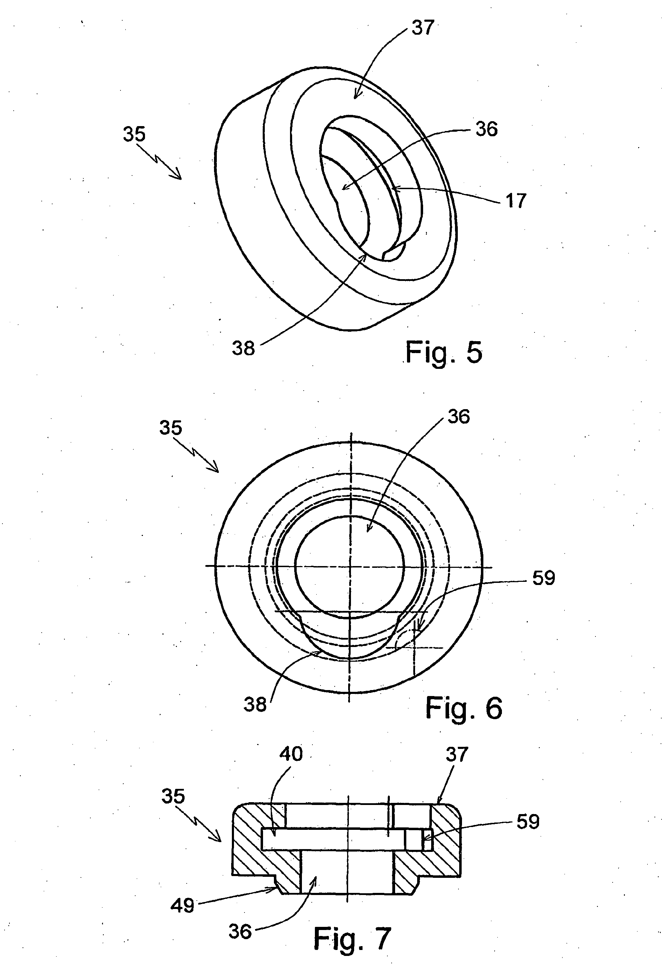

Figure 5 is a perspective view of the upper part of the bush (35), which is firmly secured to the plate (16), joined to its upper face.
Figure 6 is a top plan view of the upper part of the bush (35) of figure 5, where the semi-circular recess (38) can be clearly seen, and the interior cavity (36), as well as the stop (59) projecting in a semi-circular manner in the intermediate position (40).
Figure 7 is a cross elevation section of the bush (35) of Figure 5.

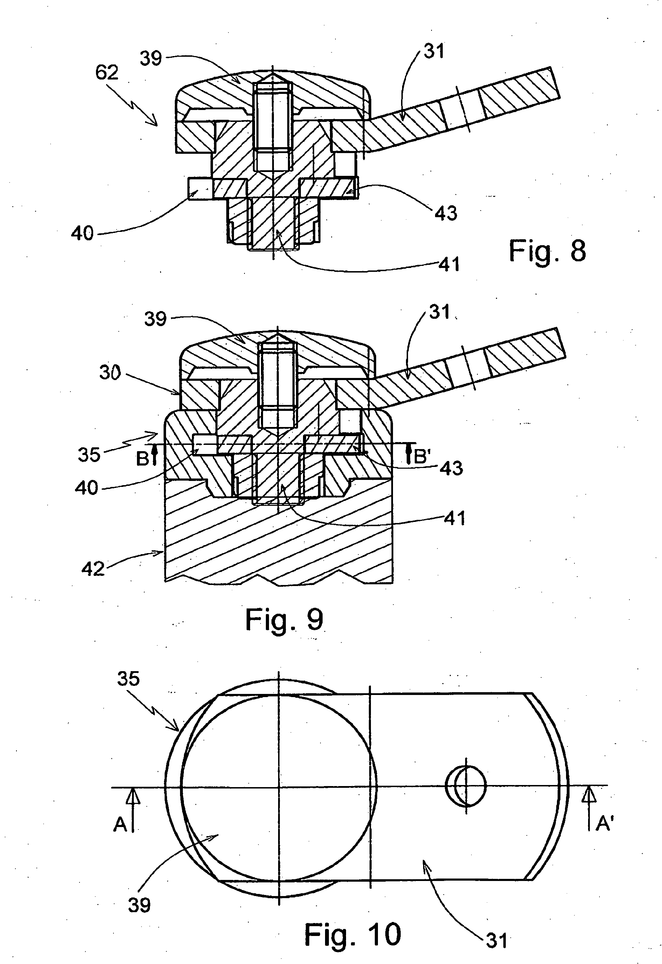

Figure 8 is a cross elevation section of the elongated support + shaft + nut + trigger assembly (62), with a cap (39) covering the upper part of the shaft (41).
Figure 9 is a cross elevation section of the elongated support + shaft + nut + trigger assembly (62) fitted to the plate (16) by inserting and anchoring the elongated support + shaft + nut + trigger assembly (62) on the inside of the bush (35).
Figure 10 is a top elevation view of Figure 9. trigger (43), the elongated support + shaft + nut + trigger assembly in its first limit position (namely contacting the stop on the right-hand side of the stop (59)).

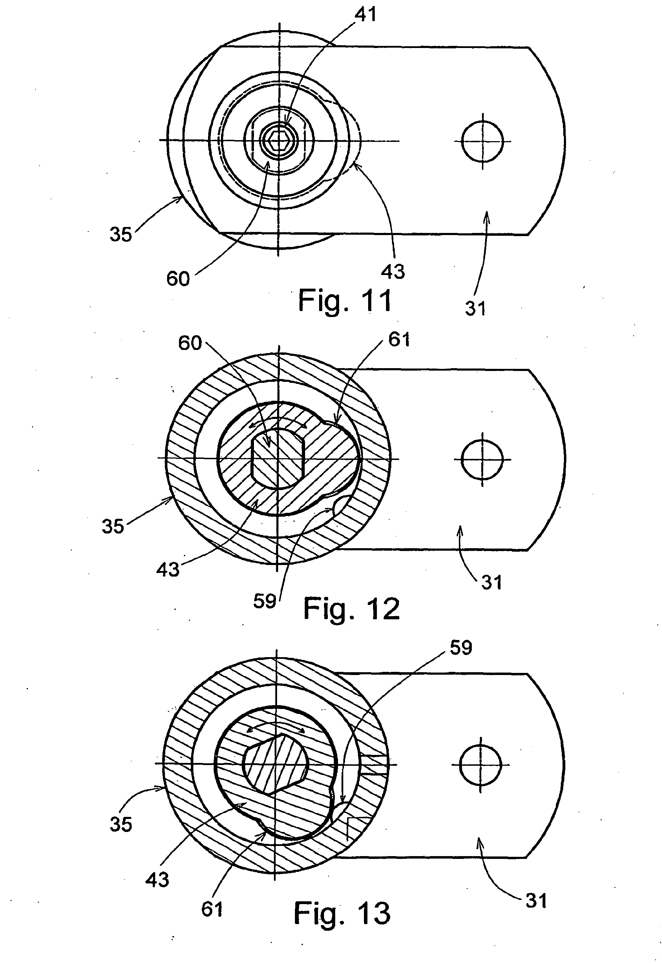

Figure 13 is the same view as in figure 12, but the elongated support + shaft + nut + trigger assembly (62) is rotated with regard to the shaft of the bush (35) to the second limit position (namely contacting the stop on the left-hand side of the stop (59)).

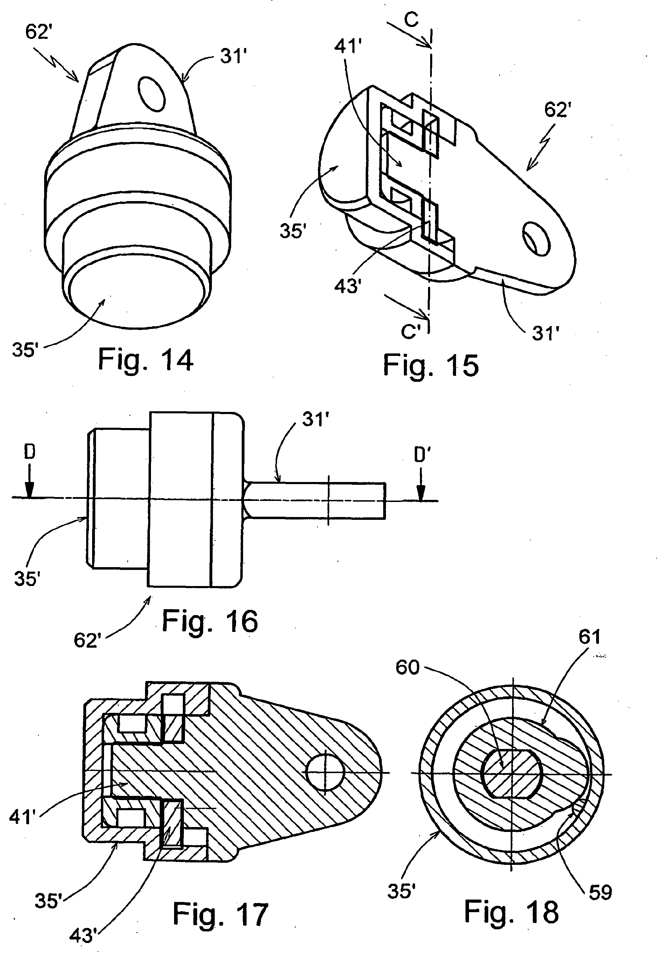

Figure 14 is a perspective view of a second embodiment of the elongated support + shaft + nut + assembly (62') and the bush (35').
Figure 15 is a longitudinal cut-away view of the second embodiment of the elongated support + shaft + nut + assembly (62') and the bush (35') of Figure 14.
Figure 16 is a side elevation view of the second embodiment of the elongated support + shaft + nut + assembly (62') and the bush (35') of Figure 14.
Figure 17 is a longitudinal cut-away view by D-D according to Figure 16 of the second embodiment of the elongated support + shaft +nut + trigger assembly (62') and the bush (35') of Figure 14.
Figure 18 is a cross cut-away view by C-C according to Figure 15 of the second embodiment of the elongated support + shaft +nut + trigger assembly (62') and the bush (35') of Figure 14.

### Description of a preferred embodiment of the invention:

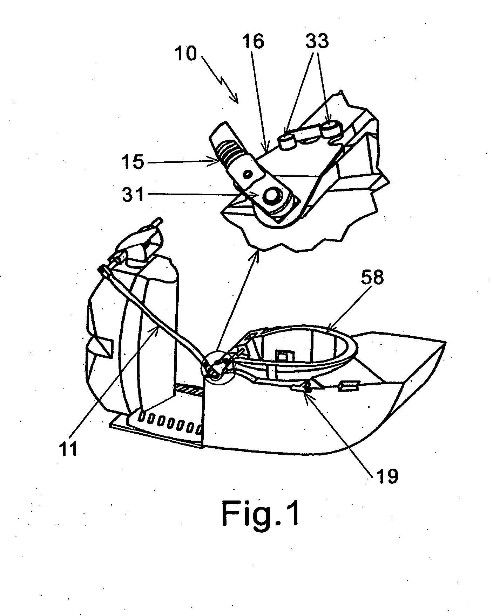

In one of the preferred embodiments of the present invention, as may be seen in figures 1 and 2, the device object of the invention (10) is formed by a chain (11), which has on one of its ends a locking terminal (12) designed to be inserted and anchored to fixing pivot (14) on the end of the handlebar, with its lock (13), and on the other end of the chain (11) there is a fixing terminal (15) designed to be secured to a support fixed to the chassis of the vehicle.

The special feature of this invention is principally that this support fixed to the vehicle chassis and the end of the fixing terminal (15) has a special design that enables the end of the fixing terminal (15) to rotate almost 360° around the vertical axis of the support fixed to the chassis, and can also be removed when in a certain position so as to take away the chain (11).

More specifically, referring to the support fixed to the vehicle chassis, it is formed by a flat mounting plate (16) with a series of slopes so as to adapt better to the curvature of the vehicle seat, see Figure 2. This mounting plate (16) has an elliptical groove (17) in its upper portion and holes (56) for anchoring the plate (16) to the vehicle chassis. On the opposite part of the mounting plate (16), namely on its lower portion, there is an orifice designed for inserting and securely immobilising an anti-theft bush (35). This bush (35) can alternatively be incorporated forming a single solid with the plate (16).

The mounting the plate (16) will preferably be made of several different parts: (27-28-29-30), each of them forming an angle of less than 90°, with the next and firmly secured to the chassis of the vehicle with bolts (33).

More specifically, referring to the end of the fixing terminal (15), it is formed by a cylindrical element (57) and on the front end there is a groove to forming an angle of less than 90°, with the next and firmly secured to the chassis of the vehicle with bolts (33).

More specifically, referring to the end of the fixing terminal (15), it is formed by a cylindrical element (57) and on the front end there is a groove to receive an elongated element (31), and this elongated element (31) is fitted with the possibility of turning with regard to the cylindrical element (57) thanks to a bolt (18), see Figure 4.

By its front end, the elongated element (31) has firmly secured the shaft + adapted trigger + nut assembly (62), designed to enter into the inner orifice of the bush (35) and retain the trigger (43) in the intermediate circumferential groove (40), see Figure 9. The aforementioned shaft + adapted trigger + nut assembly (62) can rotate around the vertical axis of the bush (35) between two end limit positions, as it comes into contact with the stop (59) on the intermediate circumferential groove (40) of the bush (35). These two limit positions can be clearly seen in figures 12 and 13.

With specific reference to figures 5-7, the bush (35) has a interior cavity (36), which is enlarged in the intermediate part of the bush (35) forming an orifice or groove of greater diameter (40), designed to receive a projecting portion or extension (43) of the trigger (43), which is inserted until the intermediate groove (40) and on rotating it is secured in the groove (40), being able to leave the recess (40) only when the extension (43) is opposite the circular recess (38) on the side of the interior cavity (36) and removing the extends inside in another cylindrical portion of greater diameter, and finally a trigger element (43) is firmly secured to said shaft (41 or 41') and at the bottom to the trigger element (43) is securely fitted to a nut (60).

The operation of the anti-theft device (10) of the invention is as follows:
- In operating position, which we will call locking the handlebar, the locking terminal (12) is inserted and locks the fixing pivot (14) fitted to the handlebar, not illustrated in the figures, whereas the other end of the chain (15) is conveniently anchored in the bush (35) and cannot be removed as it is imprisoned, but it can rotate.
- In unlocked or standby position, when the user wishes to release the anti-theft device (10) from the handlebar, they will open the lock (13) and remove the locking terminal (13) from the fixing pivot (14), thus freeing the handlebar. Then the user may carry out two different movements:
   - (a) turn the chain (11) with the end secured to the mounting plate (16) and anchor the locking terminal (12) in a rear support (19) secured to the vehicle chassis (turning 90° - 270°); or
   - (b) release the fixing terminal (15) of the bush (35) so that the chain (11) can be stored in a compartment for objects in the vehicle. Operation "b" is done as follows: rotate the chain (11) around the longitudinal axis of the bush (35) until one of the limit positions (turning more than 270° and less than 360°), then you are facing the compartment for objects in the vehicle. Operation "b" is done as follows: rotate the chain (11) around the longitudinal axis of the bush (35) until one of the limit positions (turning more than 270° and less than 360°), then you are facing the circular recess (38) with the projecting portion of the trigger (61) and the chain (11) can be removed.

As shown in figures 14-18, a second alternative embodiment of the elongated support + shaft +nut + trigger assembly (62') and of the bush (35'), has the same main parts as the elongated support + shaft + nut + trigger assembly (62) and of the bush (35) of the first embodiment, but with the main difference that the fixing support (31') to the fixing terminal it not formed by a laterally widened body (31), but rather formed by a wing-shaped body that extends upwards in a vertical direction, namely longitudinal. Another of the differences of these two alternative embodiments is that the bush (35') has a lower base (63), namely that the interior cavity (36') is not blind. Therefore, the operation of the turn of the elongated support + shaft + nut + trigger assembly (62') around the longitudinal axis of the bush (35'), and the possibility of removing this assembly (62') is the same as described in the first embodiment of the invention, See Figures 15 and 17-18.

Having sufficiently described this invention using the figures attached, it is easy to understand that any modification may be made to the detail which may be deemed to be appropriate, whenever these changes do not alter the scope of the invention as defined by the following claims.

## Claims

1. "THEFT-PREVENTION DEVICE FOR MOTORCYCLES, QUADS, SCOOTERS AND THE LIKE" comprising a combination of an anti-theft chain (11) a bush (35), a fixing pivot (14) and a support plate (16), the anti-theft chain (11) being formed by a series of links or similar elements covered on the outside with a protective cover, to one of the ends of which and by adequate means has secured to it a locking terminal (12) adapted to be connected to the fixing pivot (14) of the end of the handlebar with its corresponding lock, and the other end of the anti-theft chain (11) has a fixing terminal (15) designed to secure to the support plate (16) firmly attached to the vehicle chassis (34), **characterised in that** the fixing terminal (15) comprises a coupling unit formed by a shaft (41), Nut (60) and trigger (43) securing assembly, that is adapted to be inserted and secured inside the bush (35) attached to the support plate (16), the bush (35) having an externally cylindrical main body with a lower cylindrical extension (49) of smaller diameter than the main body, the body having an interior cavity (36) through the entire body or partly through the body, designed to receive and house securely the coupling unit, and at the upper base (37) or rim of the anti-theft bush (35) there is a semi-circular recess (38) enabling the inclusion and exclusion of the coupling unit, the coupling unit is able to rotate freely around the longitudinal axis of the bush (35) between two limit positions, and, furthermore, in a specific rotation position without any possibility to remove the coupling unit of the fixing terminal (15) from the bush (35) axially when the coupling unit is in this specific rotation position, and the coupling unit is further designed so that it can be removed from the bush (35) when the coupling unit is in a removing position.

2. "THEFT-PREVENTION DEVICE FOR MOTORCYCLES, QUADS, SCOOTERS AND THE LIKE" according to the claim 1, **characterised in that** the maximum rotating movement of the coupling unit between said two limit positions is more than 180 degrees and less than 360 degrees.

3. "THEFT-PREVENTION DEVICE FOR MOTORCYCLES, QUADS, SCOOTERS AND THE LIKE" according to the claim 1, **characterised in that** the position for removing the coupling unit of the fixing terminal of the inboard of the bush (35) will be in one of the two limit positions.

4. "THEFT-PREVENTION DEVICE FOR MOTORCYCLES, QUADS, SCOOTERS AND THE LIKE" according to the claim 1, **characterised in that** the support plate (16) of the anti-theft device adapted to be secured to a fixed point on the vehicle chassis (34) comprises a thin body formed by two flat surfaces (28,30) joined together in a slightly angular manner, which on one of its ends have one or more holes (56) for it to be secured to the vehicle chassis by means of anti-theft screws (33), while the opposite end has an orifice.

5. "THEFT-PREVENTION DEVICE FOR MOTORCYCLES, QUADS, SCOOTERS AND THE LIKE" according to the claim 1, **characterised in that** the coupling unit securing the chain fixing terminal comprises at least: a) A longitudinal shaft (41) firmly secured at its upper part to an elongated support (31) that projects laterally, this elongated support is designed to be secured direct or indirectly to the terminal of the end of the anti-theft chain (11), wherein the fixing support is formed by an elongated support that projects laterally ; b) A built in trigger (43) element on the lower end of the shaft with a projecting part with regard to the diameter of the aforementioned shaft; and c) A nut (60) secured inside the trigger element adapted to lock and guide the shaft, elongated support and trigger assembly.

6. "THEFT-PREVENTION DEVICE FOR MOTORCYCLES, QUADS, SCOOTERS AND THE LIKE" according to the claim 5, **characterised in that** a safety cap (39) is incorporated which is fixed covering the top of the longitudinal shaft (41) that projects to the exterior surface of the elongated support (31).

7. "THEFT-PREVENTION DEVICE FOR MOTORCYCLES, QUADS, SCOOTERS AND THE LIKE" according to the claim 5, **characterised in that** the trigger (43) element has a flat thin body with a circular exterior perimeter having a semi-circular projection (61), the shape of the exterior perimeter matches the interior perimeter of the upper rim of the bush (35), so that the trigger (43) can be easily inserted into this rim.

8. "THEFT-PREVENTION DEVICE FOR MOTORCYCLES, QUADS, SCOOTERS AND THE LIKE" according to the claim 5, **characterised in that** the nut (60) is elongated with a symmetrical cross-section with two portions opposite each other symmetrical and with a semi-circular shape, and two straight portions opposite each other and symmetrical.

9. "THEFT-PREVENTION DEVICE FOR MOTORCYCLES, QUADS, SCOOTERS AND THE LIKE" according to the claim 5, **characterised in that** this elongated support (31) secured to the fixing terminal (15) of the end of the anti-theft chain (11) is formed by a flat thin plate secured firmly by one of its ends to the head or mounting of the end of the of the anti-theft chain (11), and by the other end it will be firmly secured to the shaft, nut and trigger assembly, so that the elongated support (31) can rotate around the bush (35).

10. "THEFT-PREVENTION DEVICE FOR MOTORCYCLES, QUADS, SCOOTERS AND THE LINE" according to the claim 1, **characterised in that** the inner surface of the interior cavity (36) in the bush (35) has three different areas: a cylindrical upper area, an intermediate area, also cylindrical but with a larger diameter that guides the trigger (43) element, and a lower area that is also cylindrical of smaller diameter than the upper area, to house the lower area of the shaft; this second intermediate area has a projecting stop element (59), designed to acts as a stop for the projecting portion (61) of the trigger (43) and thus delimit the two limit positions of the coupling securing unit.

11. "THEFT-PREVENTION DEVICE FOR MOTORCYCLES, QUADS, SCOOTERS AND THE LIKE" according to the claim 10, **characterised in that** the stop element is semi-circular.

12. "THEFT-PREVENTION DEVICE FOR MOTORCYCLES, QUADS, SCOOTERS AND THE LIKE" according to the claim 10, **characterised in that** the interior cavity (36) in the bush (35) is blind, presenting a lower base.

13. "THEFT-PREVENTION DEVICE FOR MOTORCYCLES, QUADS, SCOOTERS AND THE LIKE" according to the claim 1, **characterised in that** the fixing support (31') that is part of the coupling unit for fitting the terminal (15) of the chain is formed by a wing-shaped body (62') that extends upwards in vertical position, when the device is mounted to the vehicle.

## Patentansprüche

1. "DIEBSTAHLSCHUTZVORRICHTUNG FÜR MOTORRÄDER, QUADS, MOTORROLLER UND ÄHNLICHES", bestehend aus einer Kombination aus einer Antidiebstahlkette (11), einer Buchse (35), einem Fixierstift (14) und einer Trägerplatte (16), wobei die Antidiebstahlkette (11) aus einer Reihe von Gliedern oder ähnlichen Elementen besteht, die von außen mit einer Schutzschicht umhüllt sind, und wobei an einem der Enden der Kette mit geeigneten Mitteln ein Verriegelungsendstück (12) angebracht ist, das so gestaltet ist, dass es mittels des Fixierstiftes (14) am Ende des Lenkers mit dem entsprechenden Schloss verbunden werden kann, und wobei das andere Ende der Antidiebstahlkette (11) ein Befestigungsendstück (15) besitzt, welches so gestaltet ist, dass es an die Trägerplatte (16), die fest mit dem Fahrzeugrahmen (34) verbunden ist, angeschlossen werden kann, **dadurch gekennzeichnet, dass** das Befestigungsendstück (15) eine Kopplungseinheit bestehend aus einer Sicherungsanordnung mit Welle (41), Mutter (60) und Auslöser (43) umfasst, die geeignet ist, um in die an der Trägerplatte (16) befestigte Buchse (35) eingeführt und dort fixiert zu werden, wobei die Buchse (35) einen außen zylindrisch geformten Hauptkörper mit einer sich nach unten erstreckenden zylindrischen Verlängerung (49), die schmaler als der Hauptkörper ist, besitzt und wobei der Körper einen inneren Hohlraum (36) aufweist, der durch den gesamten Körper oder teilweise durch den Körper verläuft und für die Aufnahme und sichere Unterbringung der Kopplungseinheit konzipiert ist, und wobei an der oberen Basisfläche (37) oder am Rand der Diebstahlsicherungsbuchse (35) eine halbkreisförmige Aussparung (39) vorgesehen ist, welche die Ein- und Ausgliederung der Kopplungseinheit ermöglicht, die sich um die Längsachse der Buchse (35) zwischen zwei Endpositionen und ebenfalls in einer speziellen Drehstellung frei drehen kann, ohne dass die Kopplungseinheit am Befestigungsendstück (15) axial aus der Buchse (35) entnommen werden kann, wenn sich die Kopplungseinheit in dieser spezifischen Drehstellung befindet und wobei die Kopplungseinheit außerdem so konzipiert ist, dass sie aus der Buchse (35) herausgenommen werden kann, wenn sich die Kopplungseinheit in einer Entnahmestellung befindet.

2. "DIEBSTAHLSCHUTZVORRICHTUNG FÜR MOTORRÄDER, QUADS, MOTORROLLER UND ÄHNLICHES", nach Anspruch 1, **dadurch gekennzeichnet, dass** die maximale Drehbewegung der Kopplungseinheit zwischen den beiden Endpositionen mehr als 180 Grad und weniger als 360 Grad beträgt.

3. "DIEBSTAHLSCHUTZVORRICHTUNG FÜR MOTORRÄDER, QUADS, MOTORROLLER UND ÄHNLICHES", nach Anspruch 1, **dadurch gekennzeichnet, dass** die Stellung für die Entnahme der Kopplungseinheit aus dem Inneren der Buchse (35) am Befestigungsendstück eine der beiden Endpositionen ist.

4. "DIEBSTAHLSCHUTZVORRICHTUNG FÜR MOTORRÄDER, QUADS, MOTORROLLER UND ÄHNLICHES", nach Anspruch 1, **dadurch gekennzeichnet, dass** die Trägerplatte (16) der Diebstahlschutzvorrichtung, die an einem festen Punkt am Fahrzeugrahmen (34) befestigt werden kann, einen aus zwei leicht winkelförmig miteinander verbundenen ebenen Flächen (28, 30) gebildeten dünnen Körper umfasst, der an einem Ende ein oder mehrere Bohrungen (56) aufweist, über die er mittels Diebstahlsicherungsschrauben (33) am Fahrzeugrahmen befestigt werden kann, während das entgegengesetzte Ende eine Öffnung aufweist.

5. "DIEBSTAHLSCHUTZVORRICHTUNG FÜR MOTORRÄDER, QUADS, MOTORROLLER UND ÄHNLICHES", nach Anspruch 1, **dadurch gekennzeichnet, dass** die Kopplungseinheit, die das Befestigungsendstück für die Kette sichert, mindestens Folgendes umfasst: a) Eine Längswelle (41), die an ihrem oberen Teil mit einem seitlich hervorstehenden länglichen Träger (31) sicher befestigt ist, wobei dieser längliche Träger so gestaltet ist, dass er direkt oder indirekt am Endstück, wo sich das Ende der Antidiebstahlkette (11) befindet, befestigt werden kann und wobei der Befestigungsträger durch einen seitlich hervorstehenden länglichen Träger gebildet wird; b) Ein eingebautes Auslöseelement (43) am unteren Ende der Welle mit einem im Verhältnis zum Durchmesser der Welle hervorstehenden Teil; und c) eine im Inneren des Auslöseelementes gesicherte Mutter (60), die so gestaltet ist, dass sie die Welle, den verlängerten Träger und die Auslösevorrichtung verriegelt und führt.

6. "DIEBSTAHLSCHUTZVORRICHTUNG FÜR MOTORRÄDER, QUADS, MOTORROLLER UND ÄHNLICHES", nach Anspruch 5, **dadurch gekennzeichnet, dass** eine Sicherungskappe (39) so integriert und befestigt ist, dass sie die Oberseite der Längswelle (41), die an der Außenfläche des länglichen Trägers (31) hervorsteht, abdeckt.

7. "DIEBSTAHLSCHUTZVORRICHTUNG FÜR MOTORRÄDER, QUADS, MOTORROLLER UND ÄHNLICHES", nach Anspruch 5, **dadurch gekennzeichnet, dass** das Auslöseelement (43) einen flachen, dünnen Körper mit einem kreisförmigen Außenumfang besitzt, der einen halbkreisförmigen Vorsprung (61) aufweist, wobei die Form des Außenumfangs dem unteren Umfang des oberen Randes der Buchse (35) entspricht, sodass der Auslöser (43) auf einfache Weise in diesen Rand eingeführt werden kann.

8. "DIEBSTAHLSCHUTZVORRICHTUNG FÜR MOTORRÄDER, QUADS, MOTORROLLER UND ÄHNLICHES", nach Anspruch 5, **dadurch gekennzeichnet, dass** die Mutter (60) länglich ist und einen symmetrischen Querschnitt mit zwei einander symmetrisch gegenüberliegenden halbkreisförmigen Abschnitten und zwei einander symmetrisch gegenüberliegenden geraden Abschnitten aufweist.

9. "DIEBSTAHLSCHUTZVORRICHTUNG FÜR MOTORRÄDER, QUADS, MOTORROLLER UND ÄHNLICHES", nach Anspruch 5, **dadurch gekennzeichnet, dass** dieser längliche Träger (31), der am Befestigungsendstück (15) am Ende der Diebstahlschutzkette (11) befestigt ist, aus einer flachen, dünnen Platte besteht, die an einem ihrer Enden fest mit dem Kopf oder der Halterung am Ende der Antidiebstahlkette (11) und am anderen Ende fest mit der Anordnung aus Welle, Mutter und Auslöser verbunden ist, sodass sich der längliche Träger (31) um die Buchse (35) drehen kann.

10. "DIEBSTAHLSCHUTZVORRICHTUNG FÜR MOTORRÄDER, QUADS, MOTORROLLER UND ÄHNLICHES", nach Anspruch 1, **dadurch gekennzeichnet, dass** die Innenfläche des inneren Hohlraums (36) in der Buchse (35) drei verschiedene Bereiche aufweist: einen zylindrischen oberen Bereich, einen ebenfalls zylindrischen, aber mit einem größeren Durchmesser ausgebildeten mittleren Bereich, der das Auslöseelement (43) führt, und einen unteren Bereich, der ebenfalls zylindrisch, aber mit einem kleineren Durchmesser als der obere Bereich ausgebildet ist, um den unteren Bereich der Welle aufzunehmen; dieser zweite, mittlere Bereich ein hervorstehendes Anschlagelement (59) aufweist, das als Anschlag für den hervorstehenden Abschnitt (61) des Auslösers (43) ausgebildet ist und so die beiden Endpositionen der Kopplungssicherungseinheit begrenzt.

11. "DIEBSTAHLSCHUTZVORRICHTUNG FÜR MOTORRÄDER, QUADS, MOTORROLLER UND ÄHNLICHES", nach Anspruch 10, **dadurch gekennzeichnet, dass** das Anschlagelement halbkreisförmig ist.

12. "DIEBSTAHLSCHUTZVORRICHTUNG FÜR MOTORRÄDER, QUADS, MOTORROLLER UND ÄHNLICHES", nach Anspruch 10, **dadurch gekennzeichnet, dass** der innere Hohlraum (36) in der Buchse (35) verdeckt ist und eine untere Basisfläche aufweist.

13. "DIEBSTAHLSCHUTZVORRICHTUNG FÜR MOTORRÄDER, QUADS, MOTORROLLER UND ÄHNLICHES", nach Anspruch 1, **dadurch gekennzeichnet, dass** der Befestigungsträger (31'), der Teil der Kopplungseinheit für die Befestigung des Endstücks (15) der Kette ist, aus einem flügelförmigen Körper (62') besteht, der sich senkrecht nach oben hin erstreckt, wenn die Vorrichtung am Fahrzeug montiert ist.

## Revendications

1. « DISPOSITIF ANTIVOL POUR MOTOS, QUADS, SCOOTERS ET SIMILAIRES » comprenant une combinaison d'une chaîne antivol (11), d'une bague (35), d'un pivot de fixation (14) et d'une plaque de support (16), la chaîne antivol (11) étant formée d'une série de maillons ou d'éléments similaires recouverts à l'extérieur par un couvercle de protection, dont une des extrémités, par des moyens adéquats, est fixée à une borne de verrouillage (12) adaptée pour être reliée au pivot de fixation (14) de l'extrémité du guidon avec son verrou correspondant, et l'autre extrémité de la chaîne d'antivol (11) comporte une borne de fixation (15) conçue pour être fixée à la plaque de support (16), fermement fixée au châssis du véhicule (34), **caractérisé en ce que** la borne de fixation (15) comprend une unité de couplage formé d'une tige (41), d'un écrou (60) et d'un déclencheur (43) fixant l'assemblage, qui est apte à être insérée et fixée à l'intérieur de la bague (35) fixée à la plaque de support (16), la bague (35) comportant un corps principal extérieur cylindrique avec une extension cylindrique inférieure (49) de plus petit diamètre que le corps principal, le corps ayant une cavité intérieure (36) à travers le corps entier ou partiellement par le corps conçu pour recevoir et loger fermement l'unité de couplage, et à la base supérieure (37) ou rebord de la bague antivol (35) se trouve un évidement semi-circulaire (39) permettant l'inclusion et l'exclusion de l'unité de couplage, l'unité de couplage étant capable de tourner librement autour de l'axe longitudinal de la bague (35) entre deux positions de fin de course, et, en outre, dans une position spécifique de rotation, sans possibilité de retirer axialement l'unité de couplage de la borne de fixation (15) de la bague (35) lorsque l'unité de couplage est dans cette position spécifique de rotation, et l'unité de couplage est en outre conçue de sorte à être retirée de la bague (35) lorsque l'unité de couplage est dans une position de retrait.

2. « DISPOSITIF ANTIVOL POUR MOTOS, QUADS, SCOOTERS ET SIMILAIRES » selon la revendication 1, **caractérisé en ce que** le mouvement de rotation maximal de l'unité de couplage entre lesdites deux positions de fin de course est supérieur à 180 degrés et inférieur à 360 degrés.

3. « DISPOSITIF ANTIVOL POUR MOTOS, QUADS, SCOOTERS ET SIMILAIRES » selon la revendication 1, **caractérisé en ce que** la position de retrait de l'unité de couplage de la borne de fixation de l'intérieur de la bague (35) sera sur l'une des deux positions de fin de course. La position de retrait de l'unité de couplage de la borne de fixation de l'intérieur de la bague (35) sera dans une des deux positions de fin de course.

4. « DISPOSITIF ANTIVOL POUR MOTOS, QUADS, SCOOTERS ET SIMILAIRES » selon la revendication 1, **caractérisé en ce que** la plaque de support (16) du dispositif antivol apte à être fixée à un point fixe sur le châssis du véhicule (34) comprend un corps mince formé de deux surfaces planes (28, 30) reliées entre elles d'une manière légèrement angulaire, qui sur une de leurs extrémités, ont un ou plusieurs troncs (56) pour être fixées au châssis du véhicule au moyen de vis antivol (33), tandis que l'extrémité opposée comporte un orifice.

5. « DISPOSITIF ANTIVOL POUR MOTOS, QUADS, SCOOTERS ET SIMILAIRES » selon la revendication 1, **caractérisé en ce que** l'unité de couplage sécurisant la borne de fixation de la chaîne comprend au moins : a) Une tige longitudinale (41) solidement fixée sur sa partie supérieure à un support allongé (31) qui saillit latéralement, ce support allongé est conçu pour être fixé directement ou indirectement à la borne de l'extrémité de la chaîne d'antivol (11), où le support de fixation est formé d'un support allongé qui saillit latéralement ; b) Un élément de déclenchement (43) intégré à l'extrémité inférieure de la tige avec une partie saillante par rapport au diamètre de la tige précitée ; et c) Un écrou (60) fixé à l'intérieur de l'élément de déclenchement adapté pour verrouiller et guider l'assemblage de la tige, support allongé et déclencheur.

6. « DISPOSITIF ANTIVOL POUR MOTOS, QUADS, SCOOTERS ET SIMILAIRES » selon la revendication 5, **caractérisé en ce que** un capuchon de sécurité (39) est incorporé, qui est fixé en recouvrant la partie supérieure de la tige longitudinale (41) qui fait saillie sur la surface extérieure du support allongé (31).

7. « DISPOSITIF ANTIVOL POUR MOTOS, QUADS, SCOOTERS ET SIMILAIRES » selon la revendication 5, **caractérisé en ce que** l'élément de déclenchement (43) a un corps plat et mince avec un périmètre extérieur circulaire ayant une saillie semi-circulaire (61), la forme du périmètre extérieur correspond au périmètre inférieur du rebord supérieur de la bague (35), de sorte que le déclencheur (43) peut être facilement inséré dans ce rebord.

8. « DISPOSITIF ANTIVOL POUR MOTOS, QUADS, SCOOTERS ET SIMILAIRES » selon la revendication 5, **caractérisé en ce que** l'écrou (60) est de forme allongée avec une section transversale symétrique avec deux portions opposées de manière symétrique et avec une forme semi-circulaire, et deux parties rectilignes opposées l'une à l'autre et symétriques.

9. « DISPOSITIF ANTIVOL POUR MOTOS, QUADS, SCOOTERS ET SIMILAIRES » selon la revendication 5, **caractérisé en ce que** ce support allongé (31) fixé à la borne de fixation (15) de l'extrémité de la chaîne antivol (11) est formé d'une plaque plate et mince fermement fixée par une de ses extrémités à la tête ou au montage de l'extrémité de la chaîne antivol (11), et par l'autre extrémité, il sera fermement fixé à l'ensemble tige, écrous et déclencheur, de sorte que le support allongé (31) peut tourner autour de la bague (35).

10. « DISPOSITIF ANTIVOL POUR MOTOS, QUADS, SCOOTERS ET SIMILAIRES » selon la revendication 1, **caractérisé en ce que** la surface intérieure de la cavité intérieure (36) dans la bague (35) présente trois zones différentes : une partie supérieure cylindrique, une zone intermédiaire, également cylindrique mais de plus grand diamètre qui guide l'élément de déclenchement (43), et une zone inférieure qui est également cylindrique de plus petit diamètre que la partie supérieure, pour loger la partie inférieure de la tige ; cette deuxième zone intermédiaire présente un élément saillant de butée (59), conçue pour faire fonction de butée pour la partie en saillie (61) du déclencheur (43) et donc délimite les deux positions de fin de course de l'unité de couplage de fixation.

11. « DISPOSITIF ANTIVOL POUR MOTOS, QUADS, SCOOTERS ET SIMILAIRES » selon la revendication 10, **caractérisé en ce que** l'élément de butée est semi-circulaire.

12. « DISPOSITIF ANTIVOL POUR MOTOS, QUADS, SCOOTERS ET SIMILAIRES » selon la revendication 10, **caractérisé en ce que** la cavité intérieure (36) dans la bague (35) est aveugle, présentant une base inférieure.

13. « DISPOSITIF ANTIVOL POUR MOTOS, QUADS, SCOOTERS ET SIMILAIRES » selon la revendication 1, **caractérisé en ce que** le support de fixation (31') qui fait partie de l'unité de couplage pour le montage de la borne (15) de la chaîne est formé d'un corps en forme d'aile (62') qui se prolonge vers le haut en position verticale, lorsque le dispositif est monté sur le véhicule.
